# FASCICULE DE BREVET EUROPEEN

(11) **EP 2 380 646 B1**
(45) Date de publication et mention de la délivrance du brevet: **14.03.2018**
(21) Numéro de dépôt: 11161559.7
(22) Date de dépôt: 07.04.2011
(51) Int. Cl.: B01D 19/00, G01N 1/10, G01N 1/22, G01N 1/40

(54) **Installation et procédé de caractérisation de gaz dissous dans un liquide**
Vorrichtung und Verfahren zur Charakterisierung von Gelöstgas in einer Flüssigkeit
Apparatus and process to characterize dissolved gas in liquid

(30) Priorité: 22.04.2010 FR 1053064
(43) Date de publication de la demande: 26.10.2011
(73) Titulaire: ENGIE, 92400 Courbevoie (FR)
(72) Inventeur: Tastard, Christophe, 56400 Plougoumelen (FR); Gleize, Philippe, 77600 Bussy Saint Georges (FR); Toquet, Alain, 92000 Nanterre (FR)
(74) Mandataire: Novagraaf Technologies

(56) Documents cités:
- EP-A2- 0 272 861
- DE-U1- 20 217 473
- JP-A- 59 026 031
- JP-A- 2007 225 439
- US-A- 5 183 486

## Description

L'invention concerne, de façon générale, la gestion des ressources énergétiques.

Plus précisément, l'invention concerne, selon un premier aspect, une installation de caractérisation de gaz dissous dans un liquide, cette installation comprenant au moins un circuit de fluide incluant des première et deuxième branches, la première branche présentant une première extrémité pour l'admission du liquide et une deuxième extrémité se raccordant à la deuxième branche, et chaque branche comprenant au moins une vanne.

Une installation de ce type est par exemple connue de la demande de brevet japonais JP 59 026031.

Il est connu de stocker le gaz combustible pour en assurer la fourniture optimale aux consommateurs, y compris lors de pics de consommation ou lors d'une potentielle défaillance d'un fournisseur.

Il est également connu, pour ce faire, de stocker le gaz dans une nappe aquifère. Dans cette configuration, le gaz issu de gisements et acheminé par le réseau de transport, est injecté dans une roche poreuse qui contient de l'eau. Une faible partie de ce gaz naturel se trouve alors dissous dans l'eau de l'aquifère.

Dans le cadre du suivi de l'activité de ces stockages, il est nécessaire de récolter des informations quantitatives sur les teneurs en gaz dissous dans l'eau de la nappe aquifère de stockage.

Pour ce faire, des échantillons d'eau sont prélevés à la pression de stockage (allant jusqu'à 80 bars en fond de puits) et sont conservés dans des capsules en titane.

Ces capsules sont ensuite apportées à un laboratoire où le gaz dissous est extrait et analysé.

Pour optimiser cette opération de caractérisation, il convient d'extraire l'ensemble des gaz dissous, de déterminer leur volume, et d'en faire l'analyse.

Il est connu de procéder à cette opération au moyen d'un équipement utilisant une pompe à mercure. Le principe consiste à mettre sous vide la capsule contenant l'échantillon liquide, et à entraîner le gaz par un flux de mercure. Le gaz dissous est ensuite récupéré dans une éprouvette pour en déterminer le volume, puis transféré vers un analyseur.

Ces manipulations sont toutefois très longues et contraignantes en raison notamment de la toxicité du mercure utilisé et de la complexité de l'équipement.

De nombreuses techniques ont été proposées pour la caractérisation de gaz dissous dans des liquides, notamment dans l'huile ou dans l'eau de mer.

Des exemples de ces techniques sont donnés dans les documents de brevets US6602327, US4853006, US2060242, US20030084916, US5645625, et US5183486.

Cependant, dans la plupart de ces techniques, le gaz est extrait sans que la totalité du volume de gaz dissous ne puisse être collecté et mesuré.

Bien que, dans certains cas, une estimation de la quantité de gaz dissous puisse être effectuée d'après des calculs thermodynamiques (équilibre entre la phase gazeuse et la phase liquide), les techniques d'extraction partielle des gaz dissous ne permettent pas de déterminer la composition exacte des gaz dissous. En effet les gaz légers sont extraits plus facilement, ce qui conduit à un appauvrissement en gaz lourds de l'échantillon gazeux extrait. Le gaz extrait n'est donc pas représentatif de la qualité des gaz dissous dans le fluide.

D'autres techniques, par exemple décrites dans les documents de brevets US3968678, US4681601, et US4394635, ont été proposées pour évaluer de manière indirecte le volume des gaz dissous, sans procéder à l'extraction de ces derniers.

Toutefois, ces techniques ne permettent pas du tout d'obtenir une information exploitable sur la nature des gaz dissous.

Dans ce contexte, la présente invention a pour but de proposer une installation selon la revendication 1 et un procédé selon la revendication 7 permettant au moins d'extraire, de façon simple et rapide, les gaz dissous dans un échantillon liquide avec une fiabilité telle que la nature des gaz dissous puisse être déterminée au moins dans une étape ultérieure.

A cette fin, l'installation de l'invention, par ailleurs conforme à la définition générique qu'en donne le préambule ci-dessus, est essentiellement caractérisée en ce que la première branche comprend, en série dans cet ordre entre ses première et deuxième extrémités, une première vanne, un premier récipient propre à recueillir le liquide, une deuxième vanne conçue pour interrompre ou établir une communication entre l'entrée de fluide et ce premier récipient, et un piège conçu pour piéger la vapeur du liquide, en ce que la deuxième branche comprend un tronc commun étanche raccordé à la deuxième extrémité de la première branche, une troisième vanne conçue pour interrompre ou établir une communication entre la première branche et le tronc commun, un groupe de pompage, une quatrième vanne conçue pour interrompre ou établir une communication entre le tronc commun et ce groupe de pompage, une cinquième vanne conçue pour interrompre ou établir une communication entre la première branche et ce groupe de pompage, cette cinquième vanne étant raccordée à la première branche entre le premier récipient et le piège à vapeur, une première enceinte à volume variable, une sixième vanne conçue pour interrompre ou établir une communication entre le tronc commun et cette enceinte à volume variable, des moyens de mesure reliés au moins sélectivement au tronc commun et incluant au moins un capteur de pression, et une septième vanne permettant de relier le tronc commun audit capteur de pression ou à une bouteille de gaz neutre sous pression.

En outre, il est judicieux de prévoir que cette installation comprenne une capsule de prélèvement du liquide sélectivement raccordée à la première extrémité de la première branche et dont la première vanne contrôle l'ouverture, que le premier récipient soit à température contrôlée et à émission d'ultrasons, et que les moyens de mesure comprennent un capteur de température.

De préférence, cette installation comprend en outre un récepteur de gaz lié à la troisième vanne et constitué par un analyseur de gaz ou par une deuxième enceinte à volume variable pour la collecte du gaz extrait, ladite troisième vanne étant conçue pour interrompre ou établir une communication entre le tronc commun et ce récepteur.

Les moyens de mesure de pression comprennent par exemple au moins un capteur de pression propre à mesurer des pressions au moins égales à 1 mbar, et au moins un capteur de pression propre à mesurer des pressions au plus égales à 0.001 mbar.

De manière avantageuse, le groupe de pompage comprend une pompe primaire et une pompe turbo-moléculaire.

Dans le mode de réalisation préféré de l'invention, la capsule comprend un cylindre, un piston et un ressort, le piston délimitant avec le cylindre une chambre étanche à volume variable propre à contenir le liquide, et le ressort sollicitant le piston dans un sens propre à réduire le volume de la chambre.

Dans le cas où le liquide est essentiellement constitué d'eau, le premier récipient à température contrôlée peut être porté à une température de 0 degré, et le piège à vapeur comprend par exemple un deuxième récipient à température contrôlée porté à une température au plus égale à -10 degrés, et typiquement de l'ordre de -20 degrés.

L'invention concerne également un procédé de caractérisation de gaz dissous, à une pression déterminée, dans un liquide, ce procédé comprenant au moins une étape d'extraction, mettant en oeuvre une installation telle que précédemment décrite, et étant caractérisé en ce que l'étape d'extraction comprend au moins les opérations consistant à :
(a) prélever, à la pression déterminée, un échantillon de liquide dans la capsule étanche de volume connu;
(b) la première vanne de l'installation étant fermée, connecter la capsule à la première extrémité de la première branche;
(c) la troisième vanne de l'installation étant ouverte dans le sens de la connexion première branche / tronc commun, la septième vanne étant ouverte dans le sens tronc commun / capteur de pression, ouvrir les deuxième, quatrième, cinquième et sixième vannes, et activer temporairement le groupe de pompage pour mettre sous vide la première branche et le tronc commun du circuit de fluide;
(d) fermer les quatrième et cinquième vannes pour isoler le groupe de pompage, et fermer les troisième et septième vannes;
(e) ouvrir la première vanne pour transférer dans le premier récipient le liquide précédemment contenu dans la capsule, et refermer la première vanne;
(f) laisser s'établir un équilibre thermique entre le premier récipient et le piège à vapeur, puis ouvrir la troisième vanne dans le sens première branche / tronc commun;
(g) laisser s'établir l'équilibre, puis mesurer la pression et la température dans le tronc commun et dans l'enceinte à volume variable pour en déduire la quantité de gaz extrait.

L'opération (c) est de préférence mise en oeuvre en mettant le circuit de fluide sous vide avec une pression au plus égale à 0.001 mbar.

Dans le cas où le procédé est mis en oeuvre dans une installation incluant un récepteur de gaz extrait, tel qu'un analyseur ou une deuxième enceinte à volume variable pour la collecte du gaz extrait, ce procédé peut alors être complété par une étape incluant elle-même les opérations consistant à :
(h) fermer la troisième vanne;
(i) comprimer à une pression prédéterminée le gaz extrait;
(j) mettre sous vide le récepteur de gaz et la portion du tronc commun entre ce récepteur et la troisième vanne; et
(k) ouvrir la troisième vanne dans le sens d'un passage tronc commun / récepteur de gaz et vider l'enceinte à volume variable pour passer le gaz qu'elle contient vers le récepteur de gaz.

Ce procédé de caractérisation peut alors aisément comprendre une opération supplémentaire (1) consistant à analyser le gaz envoyé dans le récepteur de gaz.

Le procédé de l'invention peut aussi comprendre au moins une étape de réitération incluant elle-même les opérations consistant à :
(m) fermer la troisième vanne, ouvrir les quatrième, sixième et septième vannes dans le sens tronc commun / capteur de pression et activer temporairement le groupe de pompage pour mettre sous vide le tronc commun du circuit de fluide ;
(n) fermer les quatrième et septième vannes pour isoler le groupe de pompage du tronc commun;
(o) répéter l'opération (f);
(p) répéter l'opération (g);
(q) répéter l'opération (h);
(r) répéter l'opération (i);
(s) répéter l'opération (j);
(t) répéter l'opération (k); et
(u) répéter l'opération (1).

L'opération (i) consistant à comprimer à une pression prédéterminée le gaz extrait est avantageusement mise en oeuvre en réduisant le volume de l'enceinte à volume variable et / ou en ouvrant la septième vanne pour faire communiquer la bouteille de gaz neutre sous pression avec le tronc commun.

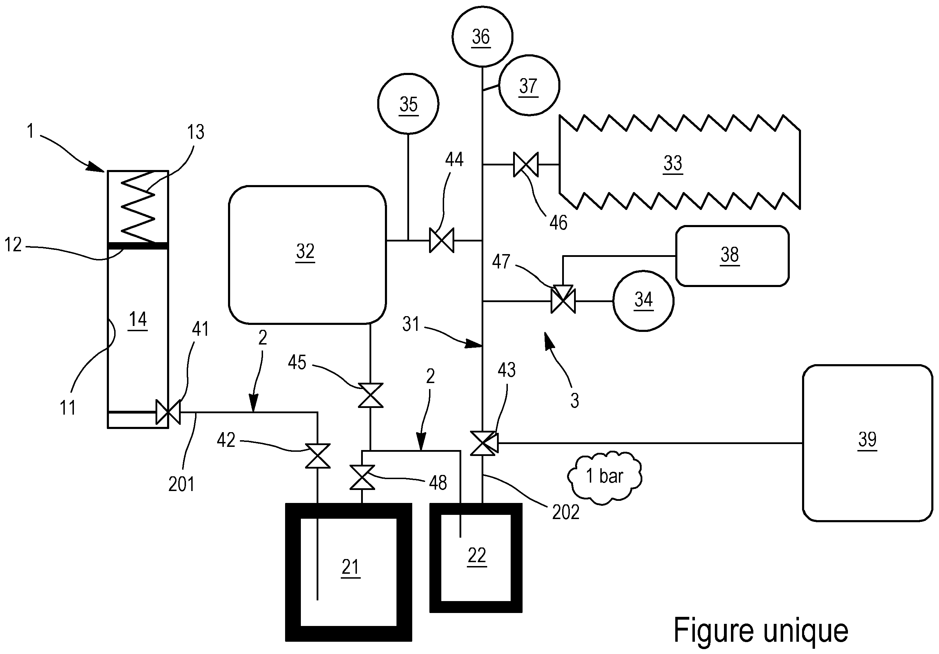

D'autres caractéristiques et avantages de l'invention ressortiront clairement de la description qui en est faite ci-après, à titre indicatif et nullement limitatif, en référence au dessin annexé dont l'unique figure est un schéma d'une installation conforme à l'invention.

Comme annoncé précédemment, l'invention concerne une installation de caractérisation de gaz dissous dans un liquide.

Cette installation comprend au moins une capsule 1 de prélèvement du liquide et un circuit de fluide essentiellement formé d'une première branche 2 et d'une deuxième branche 3.

La première branche 2 présente une extrémité 201 susceptible d'être raccordée à la capsule 1, et une deuxième extrémité 202 se raccordant à la deuxième branche 3.

Cette première branche 2 comprend, en série dans cet ordre entre ses extrémités 201 et 202, une première vanne 41, un premier récipient 21, une deuxième vanne 42, et un deuxième récipient 22 formant un piège à vapeur.

La première vanne 41 contrôle l'ouverture de la capsule 1, tandis que la deuxième vanne 42 est conçue pour interrompre ou établir une communication entre la capsule 1 et le premier récipient 21.

Ce premier récipient 21, qui a notamment pour fonction de recueillir le liquide contenu dans la capsule 1, est porté à une température par exemple régulée autour de 0 degré dans le cas où ce liquide est essentiellement constitué d'eau.

De préférence, ce récipient 21 est conçu pour émettre des ultrasons et présente un volume compris entre 120% et 150% du volume de la capsule 1.

Le deuxième récipient 22, qui est conçu pour piéger la vapeur du liquide contenu dans la capsule 1, est porté à une température inférieure à -10 degrés et par exemple de l'ordre de -20 degrés dans le cas où ce liquide est essentiellement constitué d'eau.

La deuxième branche 3 du circuit de fluide comprend au moins un tronc commun étanche 31, un groupe de pompage 32, une première enceinte 33 à volume variable, des moyens de mesure 34-37, et au moins cinq vannes supplémentaires 43 à 47.

Le tronc commun étanche 31 est raccordé à la deuxième extrémité 202 de la première branche 2 du circuit de fluide, la troisième vanne 43 étant justement conçue pour interrompre ou établir une communication entre cette première branche 2 et ce tronc commun 31.

Le groupe de pompage 32 comprend avantageusement une pompe primaire et une pompe turbo-moléculaire.

La quatrième vanne 44 est conçue pour interrompre ou établir une communication entre le tronc commun 31 et ce groupe de pompage 32.

La cinquième vanne 45 est conçue pour interrompre ou établir une communication entre la première branche 2 du circuit de fluide et ce groupe de pompage 32.

L'enceinte à volume variable 33 est assimilable à un soufflet mécanique permettant de réduire les volumes morts une fois contracté.

La sixième vanne 46 est conçue pour interrompre ou établir une communication entre le tronc commun 31 de la deuxième branche 3 et cette enceinte 33 à volume variable.

Les moyens de mesure 34 à 37 sont reliés au moins sélectivement au tronc commun 31 et incluent au moins un capteur de pression 34 et un capteur de température 37, ce dernier étant au moins conçu pour mesurer des températures entre -10 degrés et 30 degrés Celsius.

La septième vanne 47 permet de relier le tronc commun 31 au capteur de pression 34 précédemment mentionné, ou à une bouteille de gaz neutre sous pression 38.

Une huitième vanne 48 peut être prévue entre le premier récipient 21 et le deuxième récipient 22.

Les moyens de mesure 34 à 37 comprennent par exemple un capteur de pression 36 propre à mesurer des pressions au moins égales à 1 mbar, et un ou deux capteurs de pression tels que 34 et 35, propres à mesurer des pressions au plus égales à 0.001 mbar.

L'installation de l'invention comprend en outre de préférence un récepteur de gaz 39 constitué par un analyseur de gaz ou par une deuxième enceinte à volume variable pour la collecte du gaz extrait.

Ce récepteur de gaz 39 est lié à la troisième vanne 43 qui a également pour fonction d'interrompre ou d'établir une communication entre ce récepteur 39 et le tronc commun 31 de la deuxième branche 3.

La capsule 1 comprend avantageusement un cylindre 11, un piston 12 et un ressort 13.

Le cylindre 11 est par exemple réalisé en titane et conçu pour résister à des pressions élevées, par exemple de l'ordre de 80 bars.

Le piston 12, qui est monté mobile dans le cylindre 11, délimite avec ce cylindre une chambre étanche 14 à volume variable propre à contenir l'échantillon de liquide dans lequel les gaz sont dissous.

Enfin, le ressort 13 a pour fonction d'appliquer au piston 12 une force élastique dans un sens propre à réduire le volume de la chambre 14.

Le procédé de l'invention, qui met de préférence en oeuvre une installation telle que précédemment décrite, comprend, dans sa forme la plus complète, les opérations consistant à :
(a) prélever, à la pression déterminée, un échantillon de liquide dans la capsule étanche 1 de volume connu;
(b) la première vanne 41 de l'installation étant fermée, connecter la capsule 1 à la première extrémité 201 de la première branche 2;
(c) la troisième vanne 43 de l'installation étant ouverte dans le sens de la connexion première branche 2 / tronc commun 31, la septième vanne 47 étant ouverte dans le sens tronc commun 31 / capteur de pression 34, ouvrir les deuxième, quatrième, cinquième et sixième vannes 42, 44, 45, et 46, ainsi que la huitième vanne 48 si elle existe, et activer temporairement le groupe de pompage 32 pour mettre sous vide la première branche 2 et le tronc commun 31 du circuit de fluide;
(d) fermer les quatrième et cinquième vannes 44 et 45 pour isoler le groupe de pompage, et fermer les troisième et septième vannes 43 et 47;
(e) ouvrir la première vanne 41 pour transférer dans le premier récipient 21 le liquide précédemment contenu dans la capsule 1, et refermer la première vanne 41;
(f) laisser s'établir un équilibre thermique entre le premier récipient 21 et le piège à vapeur 22, puis ouvrir la troisième vanne 43 dans le sens première branche 2 / tronc commun 31;
(g) laisser s'établir l'équilibre, puis mesurer la pression et la température dans le tronc commun 31 et dans l'enceinte à volume variable 33 pour en déduire la quantité de gaz extrait;
(h) fermer la troisième vanne 43;
(i) comprimer à une pression prédéterminée le gaz extrait;
(j) mettre sous vide le récepteur de gaz 39 et la portion du tronc commun 31 entre ce récepteur 39 et la troisième vanne 43;
(k) ouvrir la troisième vanne 43 dans le sens d'un passage tronc commun 31 / récepteur de gaz 39 et vider l'enceinte à volume variable 33 pour passer le gaz qu'elle contient vers le récepteur de gaz 39; et
(l) analyser le gaz envoyé dans le récepteur de gaz 39.

L'opération (c) est de préférence mise en oeuvre en mettant le circuit de fluide sous vide avec une pression au plus égale à 0.001 mbar.

L'opération (i) consistant à comprimer à une pression prédéterminée le gaz extrait est par exemple mise en oeuvre en réduisant le volume de l'enceinte à volume variable 33 et / ou en ouvrant la septième vanne 47 pour faire communiquer la bouteille de gaz neutre sous pression 38 avec le tronc commun 31.

Avantageusement, le procédé de l'invention peut aussi comprendre au moins une étape de réitération incluant elle-même les opérations consistant à :
(m) fermer la troisième vanne 43, ouvrir les quatrième, sixième et septième vannes 44, 46, et 47 dans le sens tronc commun 31 / capteur de pression 34 et activer temporairement le groupe de pompage 32 pour mettre sous vide le tronc commun 31 du circuit de fluide;
(n) fermer les quatrième et septième vannes 44 et 47 pour isoler le groupe de pompage 32 du tronc commun 31;
(o) répéter l'opération (f);
(p) répéter l'opération (g);
(q) répéter l'opération (h);
(r) répéter l'opération (i);
(s) répéter l'opération (j);
(t) répéter l'opération (k); et
(u) répéter l'opération (1).

## Revendications

1. Installation de caractérisation de gaz dissous dans un liquide, cette installation comprenant au moins un circuit de fluide incluant des première et deuxième branches (2, 3), la première branche (2) présentant une première extrémité (201) pour l'admission du liquide et une deuxième extrémité (202) se raccordant à la deuxième branche (3), et chaque branche comprenant au moins une vanne, la première branche (2) comprenant une capsule (1) de prélèvement du liquide sélectivement raccordée à la première extrémité (201) de la première branche (2), et en série dans cet ordre entre ses première et deuxième extrémités (201, 202), une première vanne (41) contrôlant l'ouverture de ladite capsule (1), un premier récipient (21) à température contrôlée et à émission d'ultrasons propre à recueillir le liquide, une deuxième vanne (42) conçue pour interrompre ou établir une communication entre l'entrée de fluide (201) et ce premier récipient (21), et un piège (22) conçu pour piéger la vapeur du liquide, la deuxième branche (3) comprenant un tronc commun étanche (31) raccordé à la deuxième extrémité (202) de la première branche (2), une troisième vanne (43) conçue pour interrompre ou établir une communication entre la première branche (2) et le tronc commun (31), un groupe de pompage (32), une quatrième vanne (44) conçue pour interrompre ou établir une communication entre le tronc commun (31) et ce groupe de pompage (32), une cinquième vanne (45) conçue pour interrompre ou établir une communication entre la première branche (2) et ce groupe de pompage (32), cette cinquième vanne (45) étant raccordée à la première branche (2) entre le premier récipient (21) et le piège à vapeur (22), une première enceinte (33) à volume variable, une sixième vanne (46) conçue pour interrompre ou établir une communication entre le tronc commun (31) et cette enceinte (33) à volume variable, des moyens de mesure (34-37) reliés au moins sélectivement au tronc commun (31) et incluant au moins un capteur de pression (34)et un capteur de température (37), et une septième vanne (47) permettant de relier le tronc commun (31) audit capteur de pression (34) ou à une bouteille de gaz neutre sous pression (38).

2. Installation de caractérisation suivant la revendication 1, **caractérisée en ce qu'**elle comprend en outre un récepteur de gaz (39) lié à la troisième vanne (43) et constitué par un analyseur de gaz ou par une deuxième enceinte à volume variable pour la collecte du gaz extrait, ladite troisième vanne étant conçue pour interrompre ou établir une communication entre le tronc commun (31) et ce récepteur (39).

3. Installation de caractérisation suivant l'une quelconque des revendications précédentes, **caractérisée** en ce les moyens de mesure (34-37) comprennent au moins un capteur de pression (36) propre à mesurer des pressions au moins égales à 1 mbar, et au moins un capteur de pression (34, 35) propre à mesurer des pressions au plus égales à 0.001 mbar.

4. Installation de caractérisation suivant l'une quelconque des revendications précédentes, **caractérisée en ce que** le groupe de pompage (32) comprend une pompe primaire et une pompe turbo-moléculaire.

5. Installation de caractérisation suivant l'une quelconque des revendications précédentes, **caractérisée en ce que** la capsule (1) comprend un cylindre (11), un piston (12) et un ressort (13), le piston (12) délimitant avec le cylindre (11) une chambre étanche (14) à volume variable propre à contenir le liquide, et le ressort (13) sollicitant le piston (12) dans un sens propre à réduire le volume de la chambre (14).

6. Installation de caractérisation suivant l'une quelconque des revendications précédentes, **caractérisée en ce que** le premier récipient (21) est porté à une température de 0 degré, et **en ce que** le piège à vapeur (22) comprend un deuxième récipient (22) dont la température est contrôlée et au plus égale à -10 degrés.

7. Procédé de caractérisation de gaz dissous, à une pression déterminée, dans un liquide, ce procédé comprenant au moins une étape d'extraction, mettant en oeuvre une installation suivant l'une quelconque des revendications précédentes, et étant **caractérisé en ce que** l'étape d'extraction comprend au moins les opérations consistant à :
(a) prélever, à la pression déterminée, un échantillon de liquide dans la capsule étanche (1) de volume connu;
(b) la première vanne (41) de l'installation étant fermée, connecter la capsule (1) à la première extrémité (201) de la première branche (2);
(c) la troisième vanne (43) de l'installation étant ouverte dans le sens de la connexion première branche (2) / tronc commun (31), la septième vanne (47) étant ouverte dans le sens tronc commun (31) / capteur de pression (34), ouvrir les deuxième, quatrième, cinquième et sixième vannes (42, 44, 45, 46), et activer temporairement le groupe de pompage (32) pour mettre sous vide la première branche (2) et le tronc commun (31) du circuit de fluide;
(d) fermer les quatrième et cinquième vannes (44, 45) pour isoler le groupe de pompage, et fermer les troisième et septième vannes (43, 47);
(e) ouvrir la première vanne (41) pour transférer dans le premier récipient (21) le liquide précédemment contenu dans la capsule (1), et refermer la première vanne (41);
(f) laisser s'établir un équilibre thermique entre le premier récipient (21) et le piège à vapeur (22), puis ouvrir la troisième vanne (43) dans le sens première branche (2) / tronc commun (31);
(g) laisser s'établir l'équilibre, puis mesurer la pression et la température dans le tronc commun (31) et dans l'enceinte à volume variable (33) pour en déduire la quantité de gaz extrait.

8. Procédé de caractérisation suivant la revendication 7, **caractérisé en ce que** l'opération (c) est mise en oeuvre en mettant le circuit de fluide sous vide avec une pression au plus égale à 0.001 mbar.

9. Procédé de caractérisation suivant l'une quelconque des revendications 7 et 8, mettant en oeuvre une installation suivant l'une quelconque des revendications 3 à 6 combinée à la revendication 2, **caractérisé en ce qu'**il comprend en outre une étape incluant elle-même les opérations consistant à :
(h) fermer la troisième vanne (43);
(i) comprimer à une pression prédéterminée le gaz extrait;
(j) mettre sous vide le récepteur de gaz (39) et la portion du tronc commun (31) entre ce récepteur (39) et la troisième vanne (43); et
(k) ouvrir la troisième vanne (43) dans le sens d'un passage tronc commun (31) / récepteur de gaz (39) et vider l'enceinte à volume variable (33) pour passer le gaz qu'elle contient vers le récepteur de gaz (39).

10. Procédé de caractérisation suivant la revendication 9, **caractérisé en ce qu'**il comprend une opération supplémentaire (1) consistant à analyser le gaz envoyé dans le récepteur de gaz (39).

11. Procédé de caractérisation suivant la revendication 10, **caractérisé en ce qu'**il comprend en outre au moins une étape de réitération incluant elle-même les opérations consistant à :
(m) fermer la troisième vanne, ouvrir les quatrième, sixième vannes et septième vanne dans le sens tronc commun / capteur de pression et activer temporairement le groupe de pompage pour mettre sous vide le tronc commun du circuit de fluide ;
(n) fermer les quatrième et septième vanne pour isoler le groupe de pompage du tronc commun;
(o) répéter l'opération (f);
(p) répéter l'opération (g);
(q) répéter l'opération (h);
(r) répéter l'opération (i);
(s) répéter l'opération (j);
(t) répéter l'opération (k); et
(u) répéter l'opération (1).

12. Procédé de caractérisation suivant l'une quelconque des revendications 9 à 11, caractérisé en ce l'opération (i) consistant à comprimer à une pression prédéterminée le gaz extrait est mise en oeuvre en réduisant le volume de l'enceinte à volume variable (33) et / ou en ouvrant la septième vanne (47) pour faire communiquer la bouteille de gaz neutre sous pression (38) avec le tronc commun (31).

13. Procédé de caractérisation suivant l'une quelconque des revendications 9 à 12, **caractérisé en ce que** le liquide est essentiellement constitué d'eau.

## Patentansprüche

1. Charakterisierungsanlage von in einer Flüssigkeit gelöstem Gas, wobei diese Anlage mindestens einen Fluidkreislauf umfasst, einschließend erste und zweite Verzweigung (2, 3), wobei die erste Verzweigung (2) ein erstes Ende (201) zum Einlassen der Flüssigkeit und ein zweites Ende (202), das sich an die zweite Verzweigung (3) anschließt, aufweist, und wobei jede Verzweigung mindestens eine Absperrklappe umfasst, wobei die erste Verzweigung (2) eine Kapsel (1) zur selektiven Flüssigkeitsprobenentnahme, die an das erste Ende (201) der ersten Verzweigung (2) angeschlossen ist, und in Serie in dieser Reihenfolge zwischen ihrem ersten und zweiten Ende (201, 202), eine erste Absperrklappe (41), die das Öffnen der Kapsel (1) kontrolliert, ein erstes Behältnis (21) bei kontrollierter Temperatur und unter Aussendung von zum Einsammeln der Flüssigkeit geeignetem Ultraschall, eine zweite Absperrklappe (42), entworfen, um eine Kommunikation zwischen dem Eintritt des Fluids (201) und diesem ersten Behältnis (21) zu unterbrechen oder zu etablieren, und eine Falle (22) umfasst, entworfen, um den Dampf der Flüssigkeit einzufangen, wobei die zweite Verzweigung (3) ein gemeinsames abgedichtetes Teil (31), das an das zweite Ende (202) der ersten Verzweigung (2) angeschlossen ist, eine dritte Absperrklappe (43), entworfen, um eine Kommunikation zwischen der ersten Verzweigung (2) und dem gemeinsamen Teil (31) zu unterbrechen oder zu etablieren, eine Pumpengruppe (32), eine vierte Absperrklappe (44), entworfen, um eine Kommunikation zwischen dem gemeinsamen Teil (31) und dieser Pumpengruppe (32) zu unterbrechen oder zu etablieren, eine fünfte Absperrklappe (45), entworfen, um eine Kommunikation zwischen der ersten Verzweigung (2) und dieser Pumpengruppe (32) zu unterbrechen oder zu etablieren, wobei diese fünfte Absperrklappe (45) an die erste Verzweigung (2) zwischen dem ersten Behältnis (21) und der Dampffalle (22) angeschlossen ist, ein erstes Entladungsgefäß (33) mit variablem Volumen, eine sechste Absperrklappe (46), entworfen, um eine Kommunikation zwischen dem gemeinsamen Teil (31) und diesem Entladungsgefäß (33) mit variablem Volumen zu unterbrechen oder zu etablieren, Messmittel (34-37), mindestens selektiv mit dem gemeinsamen Teil (31) verbunden und mindestens einen Drucksensor (34) und einen Temperatursensor (37) einschließend, und eine siebte Absperrklappe (47) umfasst, die es erlaubt, das gemeinsamen Teil (31) mit dem Drucksensor (34) oder einer Flasche neutralen Gases unter Druck (38) zu verbinden.

2. Charakterisierungsanlage nach Anspruch 1, **dadurch gekennzeichnet, dass** sie des Weiteren einen mit der dritten Absperrklappe (43) verbundenen Gasempfänger (39) umfasst und aus einem Gasanalysator oder aus einem zweiten Entladungsgefäß mit variablem Volumen besteht, um das extrahierte Gas zu sammeln, wobei die dritte Absperrklappe entworfen wurde, um eine Kommunikation zwischen dem gemeinsamen Teil (31) und dem Empfänger (39) zu unterbrechen oder zu etablieren.

3. Charakterisierungsanlage nach einem der vorhergehenden Ansprüche, **dadurch gekennzeichnet, dass** die Messmittel (34-37) mindestens einen Drucksensor (36), geeignet zum Messen von Drücken von mindestens gleich 1 mbar, und mindestens einen Drucksensor (34, 35), geeignet zum Messen von Drücken von höchstens gleich 0,001 mbar, umfassen.

4. Charakterisierungsanlage nach einem der vorhergehenden Ansprüche, **dadurch gekennzeichnet, dass** die Pumpengruppe (32) eine Primärpumpe und eine Turbomolekularpumpe umfasst.

5. Charakterisierungsanlage nach einem der vorhergehenden Ansprüche, **dadurch gekennzeichnet, dass** die Kapsel (1) einen Zylinder (11), einen Kolben (12) und eine Feder (13) umfasst, wobei der Kolben (12) mit dem Zylinder (11) eine dichte Kammer (14) mit geeignetem variablem Volumen zum Enthalten der Flüssigkeit abgrenzt, und die Feder (13) den Kolben (12) in einer geeigneten Richtung zum Verringern des Volumens der Kammer (14) vorspannt.

6. Charakterisierungsanlage nach einem der vorhergehenden Ansprüche, **dadurch gekennzeichnet, dass** das erste Behältnis (21) bei einer Temperatur von 0 Grad getragen wird, und dadurch, dass die Dampffalle (22) ein zweites Behältnis (22) umfasst, von dem die Temperatur kontrolliert wird und höchstens gleich -10 Grad beträgt.

7. Charakterisierungsverfahren von in einer Flüssigkeit bei einem bestimmten Druck gelöstem Gas, wobei das Verfahren mindestens einen Extraktionsschritt umfasst, bei dem eine Anlage nach einem der vorhergehenden Ansprüche verwendet wird, und **dadurch gekennzeichnet ist, dass** der Extraktionsschritt mindestens die Vorgänge umfasst, bestehend aus Folgendem:
(a) Entnehmen, bei einem bestimmten Druck, einer Flüssigkeitsprobe in die dichte Kapsel (1) mit bekanntem Volumen;
(b) bei geschlossener erster Absperrklappe (41) der Anlage, Verbinden der Kapsel (1) mit dem ersten Ende (201) der ersten Verzweigung (2);
(c) bei geöffneter dritter Absperrklappe (43) von der Anlage in der Richtung der Verbindung erste Verzweigung (2) / gemeinsames Teil (31), bei geöffneter siebter Absperrklappe (47) in der Richtung gemeinsames Teil (31) / Drucksensor (34), Öffnen der zweiten, vierten, fünften und sechsten Absperrklappe (42, 44, 45, 46) und temporäres Aktivieren der Pumpengruppe (32), um die erste Verzweigung (2) und das gemeinsame Teil (31) des Fluidkreislaufs zu evakuieren;
(d) Schließen der vierten und fünften Absperrklappe (44, 45) zum Isolieren der Pumpengruppe und Schließen der dritten und siebten Absperrklappe (43, 47);
(e) Öffnen der ersten Absperrklappe (41) zum Transferieren der vorher in der Kapsel (1) enthaltenen Flüssigkeit in das erste Behältnis (21) und erneutes Schließen der ersten Absperrklappe (41);
(f) Etablierenlassen eines thermischen Gleichgewichts zwischen dem ersten Behältnis (21) und der Dampffalle (22), danach Öffnen der dritten Absperrklappe (43) in die Richtung erste Verzweigung (2) / gemeinsames Teil (31);
(g) Etablierenlassen des Gleichgewichts, danach Messen des Drucks und der Temperatur in dem gemeinsamen Teil (31) und in dem Entladungsgefäß mit variablem Volumen (33), um die Menge an extrahiertem Gas abzuziehen.

8. Charakterisierungsverfahren nach Anspruch 7, **dadurch gekennzeichnet, dass** der Vorgang (c) durchgeführt wird, indem der Fluidkreislauf unter Vakuum gesetzt wird, mit einem Druck von höchstens gleich 0,001 mbar.

9. Charakterisierungsverfahren nach einem der Ansprüche 7 und 8, eine Anlage nach einem der Ansprüche 3 bis 6, kombiniert mit Anspruch 2, verwendend, **dadurch gekennzeichnet, dass** sie des Weiteren einen Schritt umfasst, einschließend die Vorgänge bestehend aus:
(h) Schließen der dritten Absperrklappe (43);
(i) Komprimieren des extrahierten Gases auf einen vorbestimmten Druck;
(j) unter Vakuum setzen des Gasempfängers (39) und des Abschnitts des gemeinsamen Teils (31) zwischen diesem Empfänger (39) und der dritten Absperrklappe (43); und
(k) Öffnen der dritten Absperrklappe (43) in die Richtung einer Durchleitung gemeinsames Teil (31) / Gasempfänger (39) und Leeren des Entladungsgefäßes mit variablem Volumen (33), um das Gas, das es enthält, zum Gasempfänger (39) zu leiten.

10. Charakterisierungsverfahren nach Anspruch 9, **dadurch gekennzeichnet, dass** es einen zusätzlichen Vorgang (1) umfasst, bestehend aus Analysieren des in den Gasempfänger (39) geschickten Gases.

11. Charakterisierungsverfahren nach Anspruch 10, **dadurch gekennzeichnet, dass** es des Weiteren mindestens einen Schritt des Wiederholens umfasst, einschließend Vorgänge, bestehend aus:
(m) Schließen der dritten Absperrklappe, Öffnen der vierten, sechsten Absperrklappe und siebten Absperrklappe in die Richtung gemeinsames Teil / Drucksensor und temporäres Aktivieren der Pumpengruppe, um den gemeinsamen Teil des Fluidkreislaufs unter Vakuum zu setzen;
(n) Schließen der vierten und siebten Absperrklappe zum Isolieren der Pumpengruppe vom gemeinsamen Teil;
(o) Wiederholen des Vorgangs (f);
(p) Wiederholen des Vorgangs (g);
(q) Wiederholen des Vorgangs (h);
(r) Wiederholen des Vorgangs (i);
(s) Wiederholen des Vorgangs (j);
(t) Wiederholen des Vorgangs (k); und
(u) Wiederholen des Vorgangs (1).

12. Charakterisierungsverfahren nach einem der Ansprüche 9 bis 11, **dadurch gekennzeichnet, dass** der Vorgang (i), bestehend aus Komprimieren des extrahierten Gases auf einen vorbestimmten Druck, unter Verringerung des Volumens des Entladungsgefäßes mit variablem Volumen (33) und/oder durch Öffnen der siebten Absperrklappe (47), um die Flasche mit neutralem Gas unter Druck (38) mit dem gemeinsamen Teil (31) kommunizieren zu lassen, durchgeführt wird.

13. Charakterisierungsverfahren nach einem der Ansprüche 9 bis 12, **dadurch gekennzeichnet, dass** die Flüssigkeit im Wesentlichen aus Wasser besteht.

## Claims

1. Installation for characterising dissolved gas in a liquid, with this installation comprising at least one fluid circuit including first and second branches (2, 3), the first branch (2) having a first end (201) for the intake of the liquid and a second end (202) connected to the second branch (3), and each branch comprising at least one valve, the first branch (2) comprising a capsule (1) for sampling liquid selectively connected to the first end (201) of the first branch (2), and in series in this order between its first and second ends (201, 202), a first valve (41) controlling the opening of said capsule (1), a first container (21) at a controlled temperature and with the emission of ultrasounds able to collect the liquid, a second valve (42) designed to interrupt or establish a communication between the intake of fluid (201) and this first container (21), and a trap (22) designed to trap the vapour of the liquid, with the second branch (3) comprising a watertight joint section (31) connected to the second end (202) of the first branch (2), a third valve (43) designed to interrupt or establish a communication between the first branch (2) and the joint section (31), a pump unit (32), a fourth valve (44) designed to interrupt or establish a communication between the joint section (31) and this pump unit (32), a fifth valve (45) designed to interrupt or establish a communication between the first branch (2) and this pump unit (32), this fifth valve (45) being connected to the first branch (2) between the first container (21) and the vapour trap (22), a first chamber (33) with a variable volume, a sixth valve (46) designed to interrupt or establish a communication between the joint section (31) and this chamber (33) with a variable volume, means for measuring (34-37) connected at least selectively to the joint section (31) and including at least one pressure sensor (34) and a temperature sensor (37), and a seventh valve (47) that makes it possible to connect the joint section (31) to said pressure sensor (34) or to a bottle of neutral gas under pressure (38).

2. Installation for characterising according to claim 1, **characterised in that** it further comprises a gas receiver (39) linked to the third valve (43) and constituted by a has analyser or by a second chamber with variable volume for the collection of the extracted gas, said third valve being designed to interrupt or establish a communication between the joint section (31) and this receiver (39).

3. Installation for characterising according to any of the preceding claims, **characterised in that** the means for measuring (34-37) comprise at least one pressure sensor (36) able to measure pressures at least equal to 1 mbar, and at least one pressure sensor (34, 35) able to measure pressures at most equal to 0.001 mbar.

4. Installation for characterising according to any of the preceding claims, **characterised in that** the pump unit (32) comprises a primary pump and a turbomolecular pump.

5. Installation for characterising according to any of the preceding claims, **characterised in that** the capsule (1) comprises a cylinder (11), a piston (12) and a spring (13), with the piston (12) delimiting with the cylinder (11) a sealed chamber (14) with a variable volume able to contain the liquid, and the spring (13) urging the piston (12) in a direction that is able to reduce the volume of the chamber (14).

6. Installation for characterising according to any of the preceding claims, **characterised in that** the first container (21) is brought to a temperature of 0 degrees, and **in that** the vapour trap (22) comprises a second container (22) of which the temperature is controlled and at most equal to -10 degrees.

7. Method for characterising dissolved gas, at a determined pressure, in a liquid, with this method comprising at least one step of extracting, implementing an installation according to any of the preceding claims, and being **characterised in that** the step of extracting comprises at least the operations consisting in:
(a) sampling, at the determined pressure, a sample of liquid in the sealed capsule (1) of known volume;
(b) with the first valve (41) of the installation being closed, connecting the capsule (1) to the first end (201) of the first branch (2);
(c) with the third valve (43) of the installation being opened in the direction of the first branch (2) / joint section (31) connection, the seventh valve (47) being opened in the joint section (31) / pressure sensor (34) direction, opening the second, fourth, fifth and sixth valve (42, 44, 45, 46), and temporarily activating the pump group (32) in order to place the first branch (2) and the joint section (31) of the fluid circuit in a vacuum;
(d) closing the fourth and fifth valves (44, 45) in order to isolate the pump group, and closing the third and seventh valves (43, 47);
(e) opening the first valve (41) in order to transfer into the first container (21) the liquid previously contained in the capsule (1), and closing the first valve (41);
(f) allowing a thermal equilibrium to be established between the first container (21) and the vapour trap (22), then opening the third valve (43) in the first branch (2) / joint section (31) direction;
(g) allowing the equilibrium to be established, then measuring the pressure and the temperature in the joint section (31) and in the chamber with a variable volume (33) in order to deduce therefrom the quantity of gas extracted.

8. Method for characterising according to claim 7, **characterised in that** the operation (c) is implemented by placing the fluid circuit in a vacuum with a pressure at most equal to 0.001 mbar.

9. Method for characterising according to any of claims 7 and 8, implementing an installation according to any of claims 3 to 6 combined with claim 2, **characterised in that** it further comprises a step which itself includes the operations consisting in:
(h) closing the third valve (43);
(i) compressing at a predetermined pressure the extracted gas;
(j) placing in a vacuum the gas receiver (39) and the portion of the joint section (31) between this receiver (39) and the third valve (43); and
(k) opening the third valve (43) in the direction of a joint section (31) / gas receiver (39) passage and emptying the chamber with variable volume (33) in order to pass the gas that it contains to the gas receiver (39).

10. Method for characterising according to claim 9, **characterised in that** it comprises an additional operation (1) consisting in analysing the gas sent into the gas receiver (39).

11. Method for characterising according to claim 10, **characterised in that** it further comprises at least one step of reiteration which itself includes the operations consisting in:
(m) closing the third valve, opening the fourth, sixth valves and seventh valve in the joint section / pressure sensor direction and temporarily activating the pump unit in order to place the joint section of the fluid circuit in a vacuum;
(n) closing the fourth and seventh valves in order to isolate the pump unit from the joint section;
(o) repeating the operation (f);
(p) repeating the operation (g);
(q) repeating the operation (h);
(r) repeating the operation (i);
(s) repeating the operation (j);
(t) repeating the operation (k); and
(u) repeating the operation (1).

12. Method for characterising according to any of claims 9 to 11, **characterised in that** the operation (i) consisting in compressing the extracted gas to a predetermined pressure is implemented by reducing the volume of the chamber with a variable volume (33) and / or by opening the seventh valve (47) in order to have the bottle of neutral gas under pressure (38) communicate with the joint section (31).

13. Method for characterising according to any of claims 9 to 12, **characterised in that** the liquid is substantially comprised of water.
